# FASCICULE DE BREVET EUROPEEN

(11) **EP 1 972 757 B1**
(45) Date de publication et mention de la délivrance du brevet: **18.07.2012**
(21) Numéro de dépôt: 08153131.1
(22) Date de dépôt: 20.03.2008
(51) Int. Cl.: F01D 11/00

(54) **Ensemble rotatif d'une soufflante de turbomachine**
Rotor-Zusammenbau des Bläsers eines Strahltriebwerks
Rotor assembly of a turbomachine fan

(30) Priorité: 21.03.2007 FR 0753958
(43) Date de publication de la demande: 24.09.2008
(73) Titulaire: SNECMA, 75015 Paris (FR)
(72) Inventeur: BRAULT, Michel, 91480, QUINCY SOUS SENART (FR); ROUSSELIN, Stéphane, 77850, HERICY (FR)
(74) Mandataire: Besnard, Christophe Laurent

(56) Documents cités:
- EP-A- 1 306 523
- DE-A1- 19 940 556
- GB-A- 2 049 068
- GB-A- 2 251 897
- US-A- 2 669 383
- US-A- 2 749 028

## Description

L'invention concerne un ensemble rotatif d'une soufflante de turbomachine. Elle se destine à tout type de turbomachine, terrestre ou aéronautique, et plus particulièrement aux turboréacteurs d'avion.

Plus précisément, l'invention concerne un ensemble rotatif d'une soufflante du type comprenant un disque rotatif autour d'un axe A; une pluralité d'aubes fixées par leur pied à ce disque et s'étendant radialement vers l'extérieur, à partir de ce disque; et une pluralité de plates-formes inter-aubes s'étendant chacune entre deux aubes adjacentes et définissant le profil intérieur de la veine d'écoulement du fluide traversant la soufflante.

Dans la présente demande, l'amont et l'aval sont définis par rapport au sens d'écoulement normal du fluide (de l'amont vers l'aval) à travers la turbomachine. Par ailleurs, la direction axiale correspond à la direction de l'axe de rotation A du disque de la soufflante, et une direction radiale est une direction perpendiculaire à l'axe A. Enfin, sauf précision contraire, les adjectifs intérieur et extérieur sont utilisés en référence à une direction radiale de sorte que la partie intérieure (i.e. radialement intérieure) d'un élément est plus proche de l'axe A que la partie extérieure (i.e. radialement extérieure) du même élément.

Il doit être clair que les plates-formes inter-aubes concernées par l'invention sont des plates-formes "rapportées", c'est-à-dire des plates-formes distinctes des autres éléments de l'ensemble rotatif et assemblées à ces autres éléments. En particulier, elles ne font pas partie intégrante des aubes et il ne s'agit donc pas de plates-formes dites "intégrées".

Autant que possible, plutôt que des plates-formes "intégrées", les concepteurs de turbomachine préfèrent réaliser des plates-formes "rapportées" car elles présentent les avantages suivants :
- Elles permettent une conception simplifiée des aubes de la soufflante.
- En cas de rupture des aubes, les plates-formes "rapportées" ne sont pas liées aux fragments d'aube et les débris sont donc de taille réduite. Ainsi, le carter situé à l'extérieur des aubes (appelé carter de rétention) ne nécessite pas de piège à débris (un piège à débris étant une cavité prévue pour loger, en cas de rupture, l'aube et sa plate-forme "intégrée" et éviter ainsi d'endommager les autres aubes).
- Il est possible de réaliser les plates-formes dans un autre matériau que celui des aubes. Ainsi, les plates-formes sont généralement réalisées en matériau composite, tandis que les aubes sont en alliage métallique.

Bien entendu, les plates-formes "intégrées" doivent être retenues car sinon, elles s'éloigneraient radialement (vers l'extérieur) du disque de l'ensemble rotatif, sous l'effet des forces centrifuges.

Des ensembles rotatifs de soufflante avec plates-formes "rapportées", du type précité, sont décrits dans les documents US 4655687, US 5466125, US 5281096 , US 6217283B1, EP-A-1306523, GB-A-2251897 et GB-A-2049068.

Le document US 4655687 décrit un ensemble rotatif dans lequel chaque plate-forme inter-aubes présente plusieurs pattes s'étendant radialement vers le disque. Ces pattes sont terminées par des crochets venant s'engager avec d'autres crochets formés sur la surface extérieure du disque. Ce système de crochets permet de retenir chaque plate-forme suivant la direction radiale en s'opposant à la force centrifuge agissant sur cette plate-forme lorsqu'elle est en rotation. Ce système a un coût de fabrication élevé, du fait du coût de fabrication desdites pattes et du coût d'usinage desdits crochets.

Le document US 5546125 décrit un ensemble rotatif dans lequel chaque plate-forme inter-aubes présente une patte s'étendant radialement vers le disque, terminée par un tenon en queue d'aronde. Ce tenon est assemblé dans une mortaise usinée dans le disque. Une cale doit être insérée entre la mortaise et le tenon. Ce dernier système a pour inconvénient d'avoir un coût de fabrication élevé et d'être difficile à assembler, notamment à cause de ladite cale.

Les documents US 5281096 et US 6217283B1 décrivent des ensembles rotatifs dans lesquels, deux brides annulaires sont prévues respectivement en amont et en aval des plates-formes inter-aubes. Ces brides sont fixées sur le disque de la soufflante, par boulonnage. Ces brides recouvrent extérieurement les bords amont et aval de cette plate-forme afin de limiter le déplacement axial de chaque plate-forme et de retenir cette plate-forme suivant la direction radiale.

Ces brides doivent donc être suffisamment bien fixées au disque et suffisamment résistantes mécaniquement pour s'opposer aux forces radiales centrifuges agissant sur la plate-forme en rotation. De telles brides sont donc généralement chères à fabriquer. En outre, le montage des brides est rendu complexe du fait que chaque bride (amont ou aval) doit recouvrir extérieurement les bords (amont ou aval) de toutes les plates-formes, et que chaque bride doit être fixée solidement sur le disque.

L'invention a pour but de proposer un ensemble rotatif du type précité avec un système pour retenir les plates-formes suivant la direction radiale, qui constitue une alternative aux systèmes de l'art antérieur et qui soit facile à assembler.

Pour atteindre ce but, l'invention a pour objet un ensemble rotatif d'une soufflante de turbomachine selon la revendication 1. Cet ensemble comprend un disque rotatif autour d'un axe; une pluralité d'aubes fixées par leur pied à ce disque et s'étendant radialement vers l'extérieur, à partir de ce disque; et une pluralité de plates-formes inter-aubes s'étendant chacune entre deux aubes adjacentes et définissant le profil intérieur de la veine d'écoulement du fluide traversant la soufflante; lesdites aubes adjacentes présentant sur leurs faces latérales en vis-à-vis des glissières entre lesquelles ladite plate-forme peut coulisser, ces glissières limitant le déplacement radial, vers l'extérieur, de ladite plate-forme.

Plus précisément, lesdites glissières sont utilisées pour guider en coulissement ladite plate-forme et forment des butées pour chaque plate-forme, de manière à retenir celle-ci en s'opposant aux forces radiales centrifuges (dirigées vers l'extérieur) qui agissent sur cette plate-forme lorsque la soufflante tourne.

On notera que le fait que les glissières limitent le déplacement radial, vers l'extérieur, de la plate-forme, ne signifie pas nécessairement qu'elles empêchent tout déplacement radial de cette plate-forme. Aussi, l'invention concerne également des ensembles rotatifs dans lesquels un débattement radial de la plate-forme est possible.

L'ensemble rotatif de l'invention a l'avantage d'être simple à assembler du fait que les plates-formes sont montées par coulissement entre les aubes et du fait que le nombre de pièces de l'ensemble reste limité.

Selon un mode de réalisation préféré, le déplacement radical, vers l'intérieur de ladite plate-forme est limité par la surface extérieure du disque.

Selon un autre mode de réalistaion préféré, chacune desdites faces latérales en vis-à vis des glissières porte une glissière intérieure et une glissière extérieure, les deux glissières extérieures limitant le déplacement radical, vers l'extérieur, de ladite plate-forme, et les deux glissières intérieures limitant le déplacement radial, vers l'intérieur, de la dite plate-forme.

Selon un mode de réalisation particulier, l'ensemble rotatif de l'invention comprend des brides contre lesquelles les bords amont et aval de ladite plate-forme viennent en butée, de manière à limiter le déplacement axial de ladite plate-forme.

Ces brides, contrairement à celles de US 5281096 et de US 6217283B1, n'ont pas pour fonction de s'opposer aux forces radiales centrifuges agissant sur les plates-formes, cette dernière fonction étant assurée par les glissières. De ce fait, ces brides n'ont pas à recouvrir extérieurement les plates-formes, ce qui permet de réaliser des brides moins grandes et plus légères, et le montage de ces brides est plus simple.

Le faible encombrement des plates-formes inter-aubes et desdites brides, rend l'invention particulièrement adaptée aux moteurs de petite taille (par exemple des moteurs dont le diamètre de la soufflante est inférieur à 40 pouces, soit environ 1 mètre).

L'invention et ses avantages seront mieux compris à la lecture de la description détaillée qui suit, d'exemples de réalisation de l'invention. Cette description fait référence aux figures annexées sur lesquelles :
- la figure 1 représente schématiquement la partie amont d'un exemple de turboréacteur d'avion ;
- la figure 2 est une vue en section selon le plan radial II-II (perpendiculaire à l'axe A) de la figure 1, représentant (partiellement) un exemple d'ensemble rotatif selon l'invention, dans la zone d'assemblage d'une plate-forme inter-aubes ;
- la figure 3 est une vue en coupe suivant le plan axial III-III (contenant l'axe A) de la figure 2 ;
- les figures 4 et 5 sont des vues analogues à celle de la figure 2 représentant d'autres exemples d'ensemble rotatif.

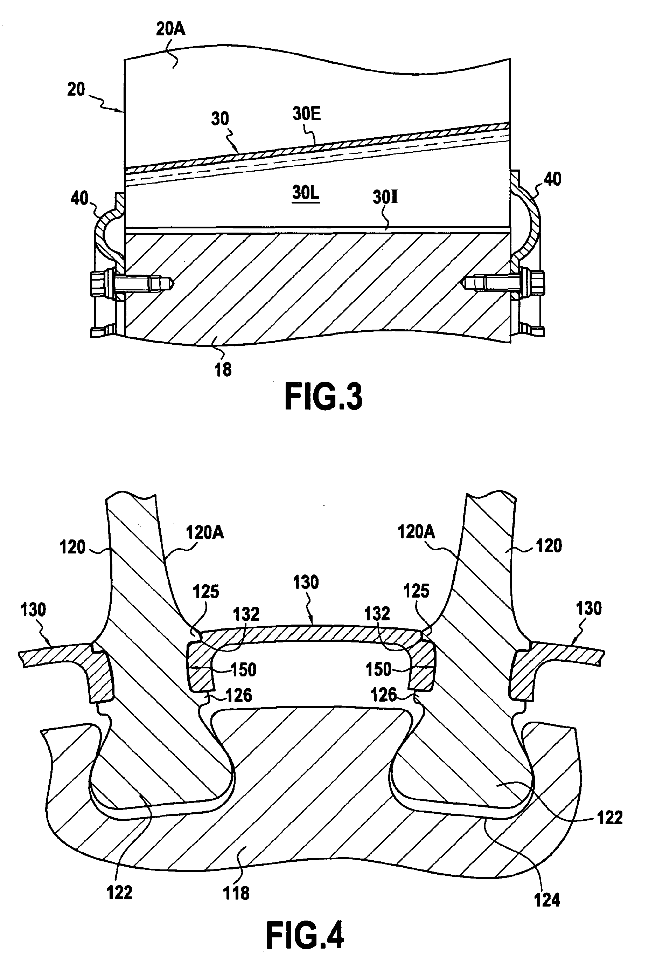

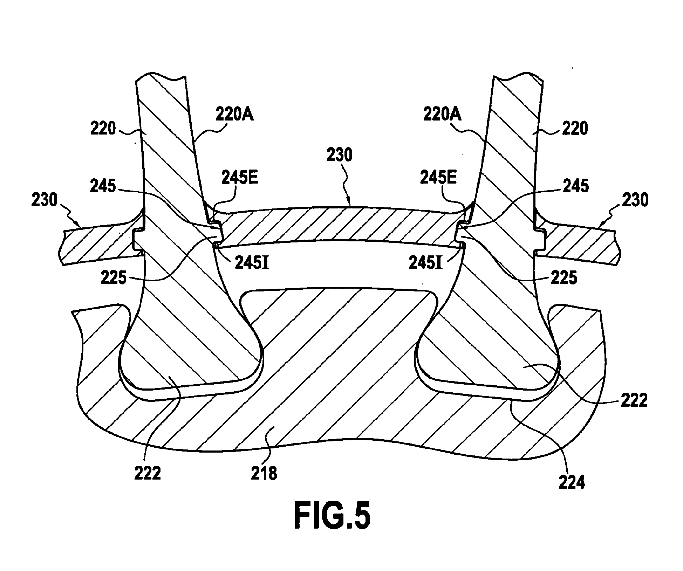

On notera que la forme des plate-formes (130, 230) des figures 4 et 5 n'est pas couverte par la revendication 1 et donc ces deux modes de réalisation des plate-formes ne font pas partie de l'invention.

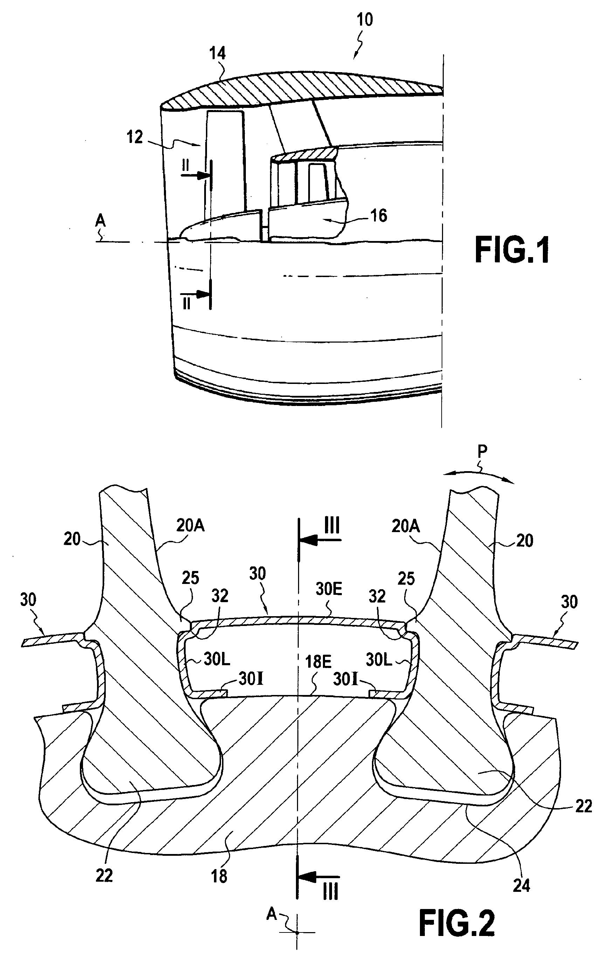

Les éléments analogues entre la figure 2 et les figures 4 et 5 sont repérés par les mêmes références numériques, respectivement augmentées de 100 et de 200.

La figure 1 représente la partie amont d'un turboréacteur 10 double corps et double flux d'un avion. Cette partie amont comprend une soufflante 12 entourée par un carter extérieur 14. En aval de la soufflante 12 se trouve le compresseur basse pression 16, ou booster, du turboréacteur.

La soufflante 12 comprend un ensemble rotatif selon l'invention, dont un exemple est représenté sur les figures 2 et 3.

Cet ensemble rotatif comprend un disque 18 tournant autour d'un axe A correspondant à l'axe de rotation du rotor du turboréacteur. A la périphérie du disque 18 sont montées des aubes 20 qui sont mobiles en rotation avec le disque 18 et régulièrement espacées les unes des autres.

Chaque aube 20 est fixée au disque 18 par son pied 22 qui forme un tenon en queue d'aronde et qui vient se loger dans une mortaise 24 ménagée à cet effet sur la surface extérieure 18E du disque 18. Les pieds d'aube 22 sont montés avec un léger jeu dans les mortaises 24, de manière à autoriser un léger pivotement des aubes 20 par rapport au disque 18, suivant la direction circonférentielle du disque. Ce léger pivotement P est symbolisé par une double flèche sur la figure 2.

Une plate-forme inter-aubes 30 s'étend entre chaque paire d'aubes 20 adjacentes. Les plates-formes 30 ont de multiples fonctions, et notamment celles : de définir un profil intérieur aérodynamique pour la veine d'écoulement du fluide traversant la soufflante; de limiter le pivotement P des aubes 20; et de protéger le disque 18 contre les projectiles pouvant traverser la soufflante.

On notera que la veine d'écoulement du fluide traversant une turbomachine peut se définir comme étant l'enveloppe qui délimite l'espace d'écoulement dudit fluide. Le profil (ou la forme) de cette veine, au niveau de la soufflante 12, est défini intérieurement par les plates-formes 30 et extérieurement par le carter de soufflante 14.

Les plates-formes 30 sont de préférence réalisées en un matériau plus léger que le matériau constitutif des aubes 20. Par exemple, les plates-formes 30 sont réalisées en matériau composite, tandis que les aubes 20 sont en alliage métallique.

Conformément à l'invention les deux aubes adjacentes 20 présentent sur leurs faces latérales 20A en vis-à-vis des glissières 25 entre lesquelles la plate-forme 30 peut coulisser. Dans les exemples représentés, les glissières 25 sont en saillie par rapport au reste des faces latérales 20A. Suivant d'autres exemples de réalisation, non représentés, les glissières 25 sont en retrait par rapport au reste des faces latérales 20A.

Les glissières 25 et la surface extérieure 18E du disque rotatif 18 définissent entre elles un logement à l'intérieur duquel la plate-forme 30 peut coulisser. Dans l'exemple, en section radiale (i.e. dans la plan de la figure 2), le contour de la plate-forme 30 et le contour dudit logement ont des formes complémentaires.

La plate-forme 30 a une section en "C" (il s'agit de sa section dans un plan radial). La plate-forme 30 est donc creuse, ce qui permet de limiter son poids. Elle comprend une paroi extérieure 30E, deux parois latérales 30L, et deux parois intérieures 301 situées dans le prolongement des parois latérales 30L, et repliées vers le centre de la plate-forme. La paroi extérieure 30E et les parois intérieures 30I sont orientées suivant la direction circonférentielle du disque 18, tandis que les parois latérales 30L sont orientées plutôt radialement. Le fait que les parois intérieures 30I ne se rejoignent pas pour former une paroi intérieure pleine, confère à la plate-forme 30 une meilleure souplesse suivant la direction circonférentielle.

Conformément à un mode de réalisation particulier de l'invention, la plate-forme 30 présente des rainures 32 s'étendant le long de ses faces latérales, chaque rainure 32 logeant, au moins partiellement, une glissière 25.

Plus précisément, les rainures 32 se situent aux intersections entre les faces latérales et la face extérieure de la plate-forme 30, c'est-à-dire aux intersections entre la paroi extérieure 30E et les parois latérales 30L, et chaque rainure 32 loge partiellement une glissière 25.

Chaque rainure 32 loge la partie intérieure d'une glissière 25, de sorte que la surface extérieure de la plate-forme 30 se situe dans le prolongement de la surface extérieure des glissières 25. Ceci permet d'assurer une continuité de surface extérieure entre les glissières 25 et la plate-forme 30, dans le but de définir le meilleur profil aérodynamique possible pour la veine d'écoulement du fluide traversant la soufflante.

Le déplacement radial, vers l'extérieur, de la plate-forme 30, est limité (ici, il est même empêché) par les glissières 25, contre lesquelles la face extérieure de la plate-forme vient en butée. Plus précisément, ce sont les parois des rainures 32 qui viennent en butée contre les glissières 25.

Par ailleurs, le déplacement radial, vers l'intérieur, de la plate-forme 30, est limité (ici, il est même empêché) par la surface extérieure 18E du disque rotatif 18, contre laquelle la face intérieure de la plate-forme 30 vient en butée. Plus précisément, ce sont les parois intérieures 30I qui viennent en butée contre la surface extérieure 18E.

En ce qui concerne le déplacement axial (suivant l'axe A) de la plate-forme 30, les bords amont et aval de celle-ci viennent en butée contre des brides 40 représentées sur la figure 3. Dans l'exemple, ces brides 40 sont annulaires et servent donc pour toutes les plates-formes 30 du disque 18. Les brides 40 sont fixées sur le disque 18 par boulonnage, par vissage, ou par tout autre moyen approprié.

On notera que les brides 40 ne recouvrent pas extérieurement la plate-forme 30. En d'autres termes, les brides 40 ne sont pas en contact avec la paroi extérieure 30E de la plate-forme 30. Ces brides sont uniquement en contact avec les bords amont et aval de la plate-forme. Ainsi, l'assemblage des brides est une opération simple.

En référence à la figure 4, nous allons décrire un autre exemple d'ensemble rotatif.

Selon cet exemple, chacune des faces latérales 120A en vis-à-vis des deux aubes 120 adjacentes, porte une glissière extérieure 125 et une glissière intérieure 126. Ainsi, entre deux aubes adjacentes 120, il y a quatre glissières : deux glissières extérieures 125 et deux glissières intérieures 126.

Les deux glissières extérieures 125 limitent le déplacement radial, vers l'extérieur, de la plate-forme 130. Ces glissières 125 ont donc la même fonction que les glissières 25 de l'exemple de la figure 2. Par ailleurs, la plate-forme 130 présente des rainures 132 analogues aux rainures 32, permettant de loger la partie intérieure des glissières 125, de sorte que la face extérieure de la plate-forme 130 se situe dans le prolongement de la face extérieure des glissières 125.

Les deux glissières intérieures 126 permettent de limiter (ici empêcher) le déplacement radial, vers l'intérieur, de la plate-forme 130.

En d'autres termes, si on considère une des aubes 120, les glissières extérieure 125 et intérieure 126 définissent entre elles une rainure 150 à l'intérieur de laquelle au moins une partie d'un bord latéral de la plate-forme 130 peut coulisser.

La figure 5 représente un autre exemple d'ensemble rotatif. Selon cet exemple, les aubes adjacentes 220 présentent sur chacune de leur face latérale 220A en vis-à-vis une glissière 225 qui est en saillie. De plus, la plate-forme 230 présente des rainures 245 s'étendant le long de ses faces latérales, et chaque rainure 245 loge intégralement une des glissières 125.

Ainsi, lorsque la plate-forme 230 tend à se déplacer radialement vers l'extérieur, la paroi intérieure 245I de la rainure 245 vient en butée contre la glissière 225. Par ailleurs, lorsque la plate-forme 230 tend à se déplacer radialement vers l'intérieur, la paroi extérieure 245E de la rainure 245 vient en butée contre la glissière 225. Ainsi, la glissière 225 permet de limiter le déplacement radial vers l'intérieur et vers l'extérieur de la plate-forme 230.

## Revendications

1. Ensemble rotatif d'une soufflante (12) de turbomachine comprenant :
- un disque (18) rotatif autour d'un axe (A);
- une pluralité d'aubes (20) fixées par leur pied (22) à ce disque et s'étendant radialement vers l'extérieur, à partir de ce disque; et
- une pluralité de plates-formes (30) inter-aubes s'étendant chacune entre deux aubes (20) adjacentes et définissant le profil intérieur de la veine d'écoulement du fluide traversant la soufflante;
dans lequel lesdites aubes (20) adjacentes présentent sur leurs faces latérales (20A) en vis-à-vis des glissières (25), ces glissières étant situées à l'extérieur du disque (18) et limitant le déplacement radial, vers l'extérieur, de ladite plate-forme (30), cet ensemble rotatif étant **caractérisé en ce que** ladite plate-forme (30) a une section en "C" et comprend une paroi extérieure (30E), deux parois latérales (30L), et deux parois intérieures (301) situées dans le prolongement des parois latérales (30L) et repliées vers le centre de la plate-forme.

2. Ensemble rotatif selon la revendication 1, comprenant des brides (40) contre lesquelles les bords amont et aval de ladite plate-forme (30) viennent en butée, de manière à limiter le déplacement axial de ladite plate-forme.

3. Ensemble rotatif selon la revendication 1 ou 2, dans lequel lesdites glissières (25) sont en saillie.

4. Ensemble rotatif selon l'une quelconque des revendications 1 à 3, dans lequel le déplacement radial, vers l'intérieur, de ladite plate-forme (30) est limité par la surface extérieure (18E) du disque (18).

5. Ensemble rotatif selon la revendication 4, dans lequel lesdites glissières (25) et la surface extérieure (18E) du disque rotatif (18) définissent entre elles un logement à l'intérieur duquel ladite plate-forme (30) peut coulisser, et dans lequel, en section radiale, le contour de la plate-forme (30) et le contour dudit logement ont des formes complémentaires.

6. Ensemble rotatif selon l'une quelconque des revendications 1 à 3, dans lequel chacune desdites faces latérales (120A) en vis-à-vis porte une glissière extérieure (125) et une glissière intérieure (126), les deux glissières extérieures limitant le déplacement radial, vers l'extérieur, de ladite plate-forme (130), et les deux glissières intérieures (126) limitant le déplacement radial, vers l'intérieur, de ladite plate-forme (130).

7. Ensemble rotatif selon l'une quelconque des revendications 1 à 6, dans lequel ladite plate-forme (30) présente des rainures (32) s'étendant le long de ses faces latérales, chaque rainure (32) logeant, au moins partiellement, une glissière (25).

8. Ensemble rotatif selon la revendication 7, dans lequel lesdites rainures (32) se situent aux intersections entre les faces latérales et la face extérieure de ladite plateforme (30), ces rainures (32) logeant la partie intérieure des glissières (25) de sorte que la face extérieure de ladite plateforme se situe dans le prolongement de la face extérieure des glissières.

9. Soufflante de turbomachine comprenant un ensemble rotatif selon l'une quelconque des revendications précédentes.

10. Turbomachine comprenant une soufflante selon la revendication 9.

## Claims

1. A rotary assembly for a turbomachine fan (12), the assembly comprising:
- a disk (18) rotatable about an axis (A);
- a plurality of blades (20) fastened by their roots (22) to said disk and extending radially outwards from said disk; and
- a plurality of inter-blade platforms (30), each extending between two adjacent blades (20) and defining the inner profile of the flow section for the fluid passing through the fan;
wherein said adjacent blades (20) present slides (25) on their facing side faces (20A), these slides being situated outside the disk (18) and limiting outward radial movement of said platform (30), said rotary assembly being **characterized in that** said platform (30) has a C-shaped section and comprises an outer wall (30E), two side walls (30L), and two inner walls (30I) extending the side walls (30L) and folded towards the middle of the platform.

2. A rotary assembly according to claim 1, including flanges (40) against which the upstream and downstream edges of said platform (30) come into abutment, so as to limit axial movement of said platform.

3. A rotary assembly according to claim 1 or 2, wherein said slides (25) project.

4. A rotary assembly according to any one of claims 1 to 3, wherein inward radial movement of said platform (30) is limited by the outer surface (18E) of the disk (18).

5. A rotary assembly according to claim 4, wherein said slides (25) and the outer surface (18E) of the rotary disk (18) define between them a housing within which said platform (30) can slide, and wherein, in radial section, the outline of the platform (30) and the outline of said housing present shapes that are complementary.

6. A rotary assembly according to any one of claims 1 to 3, wherein each of said facing side faces (120A) carries an outer slide (125) and an inner slide (126), the two outer slides limiting outward radial movement of said platform (130), and the two inner slides (126) limiting inward radial movement of said platform (130).

7. A rotary assembly according to any one of claims 1 to 6, wherein said platform (30) presents grooves (32) extending along its side faces, each groove (32) housing a slide (25), at least in part.

8. A rotary assembly according to claim 7, wherein said grooves (32) are situated at the intersections between the side faces and the outer face of said platform (30), said grooves (32) housing the inner portions of the slides (25) such that the outer face of said platform extends the outer faces of the slides.

9. A turbomachine fan including a rotary assembly according to any one of the preceding claims.

10. A turbomachine including a fan according to claim 9.

## Patentansprüche

1. Rotierende Anordnung eines Gebläses (12) einer Turbomaschine, umfassend:
- eine sich um eine Achse (A) drehende Scheibe (18),
- eine Vielzahl von Schaufeln (20), die mit ihrem Fuß (22) an dieser Scheibe befestigt sind und die sich von dieser Scheibe ausgehend radial nach außen erstrecken, sowie
- eine Vielzahl von Zwischenschaufel-Plattfiormen (30), die sich jeweils zwischen zwei benachbarten Schaufeln (20) erstrecken und das Innenprofil des Strömungskanals des das Gebläse durchströmenden Fluids definieren,
wobei die benachbarten Schaufeln (20) an ihren einander gegenüberliegenden Seitenflächen (20A) Führungen (25) aufweisen, wobei diese Führungen außerhalb der Scheibe (18) gelegen sind und die Radialbewegung der Plattform (30) nach außen begrenzen, wobei diese rotierende Anordnung **dadurch gekennzeichnet ist, daß** die Plattform (30) einen C-förmigen Querschnitt aufweist und eine Außenwand (30E), zwei Seitenwände (30L) sowie zwei Innenwände (30I), die in der Verlängerung der Seitenwände (30L) gelegen und zur Mitte der Plattform umgebogen sind, umfaßt.

2. Rotierende Anordnung nach Anspruch 1, umfassend Flansche (40), an denen der vordere und der hintere Rand der Plattform (30) in Anschlag gelangen, um die Axialbewegung der Plattform zu begrenzen.

3. Rotierende Anordnung nach Anspruch 1 oder 2, wobei die Führungen (25) vorspringend sind.

4. Rotierende Anordnung nach einem der Ansprüche 1 bis 3, wobei die Radialbewegung der Plattform (30) nach innen durch die Außenfläche (18E) der Scheibe (18) begrenzt ist.

5. Rotierende Anordnung nach Anspruch 4, wobei die Führungen (25) und die Außenfläche (18E) der Drehscheibe (18) zwischen sich eine Aufnahme definieren, in der die Plattform (30) gleiten kann, und wobei im radialen Querschnitt die Kontur der Plattform (30) und die Kontur der Aufnahme ergänzende Formen aufweisen.

6. Rotierende Anordnung nach einem der Ansprüche 1 bis 3, wobei eine jede der einander gegenüberliegenden Seitenflächen (120A) eine äußere Führung (125) und eine innere Führung (126) umfaßt, wobei die beiden äußeren Führungen die Radialbewegung der Plattform (130) nach außen begrenzen und wobei die beiden inneren Führungen (126) die Radialbewegung der Plattform (130) nach innen begrenzen.

7. Rotierende Anordnung nach einem der Ansprüche 1 bis 6, wobei die Plattform (30) Nuten (32) aufweist, die entlang ihrer Seitenflächen verlaufen, wobei jede Nut (32) eine Führung (25) -wenigstens teilweise- aufnimmt.

8. Rotierende Anordnung nach Anspruch 7, wobei die Nuten (32) an den Schnittpunkten zwischen den Seitenflächen und der Außenseite der Plattform (30) gelegen sind, wobei diese Nuten (32) den inneren Teil der Führungen (25) aufnehmen, so daß die Außenseite der Plattform in der Verlängerung der Außenseite der Führungen liegt.

9. Gebläse einer Turbomaschine, das eine rotierende Anordnung nach einem der vorhergehenden Ansprüche umfaßt.

10. Turbomaschine, die ein Gebläse nach Anspruch 9 umfaßt.
